# EUROPÄISCHE PATENTSCHRIFT

(11) **EP 2 244 927 B1**
(45) Veröffentlichungstag und Bekanntmachung des Hinweises auf die Patenterteilung: **25.04.2012**
(21) Anmeldenummer: 09701644.8
(22) Anmeldetag: 09.01.2009
(51) Int. Cl.: B62D 1/185

(54) **LENKSÄULE MIT KUNSTSTOFFGLEITHÜLSE**
STEERING COLUMN COMPRISING A PLASTIC SLIDING SLEEVE
COLONNE DE DIRECTION COMPORTANT UNE DOUILLE DE COULISSAGE EN PLASTIQUE

(30) Priorität: 18.01.2008 DE 102008005256
(43) Veröffentlichungstag der Anmeldung: 03.11.2010
(73) Patentinhaber: ThyssenKrupp Presta Aktiengesellschaft, 9492 Eschen (LI)
(72) Erfinder: SCHNITZER, Rony, FL-9491 Ruggell (LI)
(74) Vertreter: Lenzing Gerber Stute
(86) Internationale Anmeldenummer: PCT/EP2009/000089
(87) Internationale Veröffentlichungsnummer: WO 2009/090018

(56) Entgegenhaltungen:
- FR-A- 1 530 799
- US-A- 3 877 319
- US-A1- 2005 200 111

## Beschreibung

Die vorliegende Erfindung betrifft eine Lenksäulenanordnung mit den Merkmalen des Oberbegriffs des Anspruchs 1 und ein Fertigungsverfahren mit den Merkmalen des Oberbegriffs des Anspruchs 9.

Lenksäulen in Kraftfahrzeugen sind im Allgemeinen verstellbar, um die Position des Lenkrads den Anforderungen unterschiedlicher Fahrer anpassen zu können. Für die axiale Verstellbarkeit der Lenksäule ist im Stand der Technik dabei häufig eine Anordnung aus zwei konzentrischen Rohren vorgesehen, die ineinander teleskopartig beweglich sind. Zwischen den beiden Rohren ist ein Lager vorgesehen, das die axiale Verschieblichkeit gewährleistet und gegebenenfalls auch eine Relativdrehung zulässt.

Eine ähnliche Struktur weisen auch nicht axial verstellbare Lenksäulen auf, bei denen zwei koaxiale Mantelteile verschieblich ineinander gelagert sind, um eine Kompression der Lenksäule bei einem Aufprall zu ermöglichen.

Im Stand der Technik ist es bekannt, hier Kunststoffelemente einzusetzen. Kunststoffelemente verbinden selbstschmierende Eigenschaften mit vibrationsdämpfenden Eigenschaften und sind deshalb für dieses Lager besonders geeignet.

Die Dokumente US 5,902,186 und EP 1538365A1 zeigen Lenksäulen, bei denen Kunststoffbuchsen eingesetzt werden, um Vibrationen und Aufprallenergie absorbieren zu können. Diese Kunststoffbuchsen jedoch übernehmen keine Führungsaufgaben.

Aus dem Dokument US 5,417,614 ist eine längsverstellbare Lenksäule bekannt, bei der ein äußeres Mantelrohr als Drehlager eines Wellenteils dient. Das darin gelagerte Wellenteil ist mit einer außen aufgespritzten Kunststoffbuchse versehen, die wiederum in dem Mantelrohr gleitet. Eine Schiebeführung ist von der Kunststoffbuchse nicht bereit gestellt.

EP 1717127A1 zeigt eine Teleskopführung für eine Lenksäule mit einer Kunststoffbuchse, die zwischen eine Welle und ein umgebendes Mantelrohr eingesetzt ist. Diese Buchse ist an der innen liegenden Welle mit eingeformten Kunststoffelementen befestigt und gleitet in Axialrichtung und in Umfangsrichtung in dem umgebenden Mantelrohr. Schließlich zeigt das Dokument EP 1754646A2 eine Lagerhülse für eine teleskopierbare Lenksäule. Diese Hülse ist aufwendig gestaltet und mit besonderen Abstützelementen versehen, die für eine spielarme Abstützung der beiden ineinander drehbaren und verschieblichen Rohrteilen sorgen sollen. Diese Lagerung ist besonders aufwändig.

US 2005 /0200111A1 offenbart eine Lenksäulenanordnung gemäß dem Oberbegriff des Anspruchs 1.

Es ist deshalb Aufgabe der vorliegenden Erfindung, eine teleskopierbare Lagerung von zwei zueinander axial verschieblichen Rohren mittels einer Kunststoffbuchse zu schaffen, die einfach zu fertigen und zu montieren und dennoch besonders spielarm zu realisieren ist.

Diese Aufgabe wird von einer Lenksäule mit den Merkmalen des Anspruchs 1 und von einem Fertigungsverfahren mit den Merkmalen de Anspruchs 9 gelost. In den Unteransprüchen 2 bis 8 bzw. 10 bis 14 werden vorteilhafte Weiterbildungen der erfindungsgemäßen Lenksäule bzw. des erfindungsgemäßen Verfahrens beschrieben.

Die Aufgabe wird gelöst mit einer Lenksäule für ein Kraftfahrzeug, mit einer Konsole, die eine obere Manteleinheit und eine untere Manteleinheit trägt, wobei die Manteleinheiten eine darin drehbar gelagerte Lenkwelle umgeben und wobei die Manteleinheiten ein inneres Mantelrohr, mit einer äußeren Fläche und ein das innere Mantelrohr zumindest abschnittsweise umgebendes äußeres Mantelrohr aufweisen, welche in ihrer Axialrichtung ineinander mittels einer dazwischen liegenden thermoplastischen Kunststoffhülse, die eine Innenfläche, die zum inneren Mantelrohr gerichtet ist, und eine Außenfläche, die zum äußeren Mantelrohr gerichtet ist, aufweist, verschieblich gelagert, bei der erfindungsgemäß die Kunststoffhülse mit einer Presspassung in das äußere Mantelrohr eingesetzt ist und bei der das äußere Mantelrohr wenigstens einen Durchbruch aufweist, in dessen Bereich die Kunststoffhülse an ihrer Innenfläche Vorsprünge in Richtung des inneren Mantelrohrs, beziehungsweise einer Zentralachse, aufweist, an denen die Kunststoffhülse an der äußeren Fläche des inneren Mantelrohrs angelegt ist.

Entsprechend wirkt die Kunststoffhülse als Gleithülse.

Die Anlage der Vorsprünge wird dabei entweder durch eine plastische oder durch eine elastische oder durch eine Kombination aus plastischer und elastischer Verformung bewirkt. Die elastische Verformung wird im bevorzugten Fall durch ein Federelement, das Federnd auf die Vorsprünge in Richtung der Oberfläche des inneren Mantelrohrs wirkt, bewirkt.

Weiter wird die Aufgabe gelöst mit einen Verfahren zur Herstellung einer teleskopierbaren Lenksäule für ein Kraftfahrzeug, mit einer Konsole, die eine obere Manteleinheit und eine untere Manteleinheit trägt, wobei die Manteleinheiten eine darin drehbar gelagerte Lenkwelle umgeben und wobei die Manteleinheiten ein inneres Mantelrohr, mit einer äußeren Fläche, und ein das innere Mantelrohr zumindest abschnittsweise umgebendes äußeres Mantelrohr aufweisen, welche in ihrer Axialrichtung ineinander mittels einer dazwischen liegenden thermoplastischen Kunststoffhülse verschieblich gelagert sind, wobei erfindungsgemäß die Kunststoffhülse mit einer Presspassung in das äußere Mantelrohr eingesetzt wird, das innere Mantelrohr mit einem Schiebesitz in die Kunststoffhülse eingeführt wird und dass im Bereich wenigstens eines Durchbruchs des äußeren Mantelrohrs die Kunststoffhülse durch plastische Verformung an das innere Mantelrohr angelegt wird.

Die plastische Verformung wird im bevorzugten Fall durch eine Verformung, im einfachsten Fall ein Pressen, unter Wärmeinwirkung erzielt. Im weiter bevorzugten Fall erfolgt die Erwärmung durch Ultraschall, der mit einer Sonotrode, die gleichzeitig als Pressstempel verwendet wird, bewirkt.

Kleine Spalte, die im Zuge der nachfolgenden Abkühlung und/oder Rückfederung des Materials der Kunststoffhülse entstehen, sind als so klein anzusehen, dass eine spielarme Führung der beiden Mantelrohre gewährleistet ist. Es ist dabei zu berücksichtigen, dass für eine leichtgängige Verschiebung stets ein Lagerspiel vorgesehen wird. Dies kann gerade auch durch den Schrumpfungsprozess eingestellt werden.

Zusätzlich oder anstelle der plastischen Verformung kann eine elastische Verformung durch ein unter Vorspannung gehaltenes Federelement bewirkt sein.

Weil die Kunststoffhülse mit einer Presspassung in das äußere Mantelrohr eingesetzt ist und das äußere Mantelrohr wenigstens einen Durchbruch aufweist, in dessen Bereich die Kunststoffhülse durch Verformung an das innere Mantelrohr angelegt ist, ist eine nahezu spielfreie Verbindung gewährleistet, die die teleskopierbarkeit nicht beeinträchtigt. Dem Fahrer wird somit ein sicheres und festes Gefühl beim Bedienen der Lenksäule vermittelt.

Außer der Teleskopierbarkeit ist, im Falle, dass das gewünscht ist, auch eine Drehbarkeit zu erreichen, wenn die Mantelrohre sowie die Kunststoffhülse kreisrunde Querschnitte aufweisen.

Wenn die Durchbrüche bezüglich der Axialrichtung der Mantelrohre in wenigstens zwei axial beabstandeten Positionen vorgesehen sind, können auch Hebelkräfte aufgefangen werden, die auf die Lenksäule einwirken, so dass ein Verkanten der Mantelrohre ineinander beispielsweise bei einem Aufprall verhindert wird.

Etwa punktförmige Anlageflächen mit geringer Kontaktfläche sind erzielbar, wenn die Sonotroden einen runden Außendurchmesser aufweisen und dadurch einen quasi kreisrunden Abdruck auf der Außenwand der Kunststoffhülse nach ihrer Anwendung hinterlassen. Die Durchbrüche im äußeren Mantelrohr können zudem einfach als runde Bohrungen oder Ausstanzungen ausgebildet sein.

Als wichtiger Vorteil der Erfindung ist die Möglichkeit, preiswerte und einfach geformte Sonotroden für die Fertigung einzusetzen. Die Sonotrode soll nur jeweils durch die Durchbrüche hindurch geführt werden können.

Wenn die die Durchbrüche als Schlitze ausgebildet sind, die zumindest teilweise in Umfangsrichtung des äußeren Mantelrohrs verlaufen, können linienförmige oder rechteckigförmige Anlagen erreicht werden.

Weil bei einem Verfahren zur Herstellung einer teleskopierbaren Lenksäule für ein Kraftfahrzeug vorgesehen ist, dass die Kunststoffhülse mit einer Presspassung in das äußere Mantelrohr eingesetzt wird, das innere Mantelrohr mit einem Schiebesitz in die Kunststoffhülse eingeführt wird und dass im Bereich wenigstens eines Durchbruchs des äußeren Mantelrohrs die Kunststoffhülse durch plastische Verformung an das innere Mantelrohr angelegt wird, sind nur wenige Bauteile, die zudem eine besonders einfacher Ausführung ausweisen, erforderlich. Spielfreiheit wird besonders dadurch erreicht, dass die plastische Verformung der Kunststoffhülse durch Wärmeeinwirkung erfolgt. Dabei kann es vorteilhaft sein, wenn die plastische Verformung durch Ultraschalleinwirkung und radialen Druck erfolgt.

Eine gute Führung in Längsrichtung wird erzielt, wenn die Verformung an wenigstens zwei Stellen erfolgt, die in Axialrichtung der Kunststoffhülse voneinander beabstandet sind.

Eine sichere Funktion bei einem Aufprall, aber auch beim Einsatz als axial verstellbare Lenksäule wird gefördert, wenn das innere Mantelrohr eine so glatte äußere Oberfläche aufweist, dass auch nach Anlage der Kunststoffhülse infolge der lokalen Verformung eine Verschieblichkeit des inneren Mantelrohrs in der Kunststoffhülse ermöglicht wird.

In einer Weiterführung der Erfindung kann auch am inneren Mantelrohr eine Aussparung, korrespondierend mit einer Aussparung am äusseren Mantelrohr vorgesehen sein, in die - ebenfalls mit einer Sonotrode - von außen Material der Kunststoffhülse eingedrückt wird. Auf diese Weise kann ein Losbrechelement gebildet werden, das erst bei Überschreiten einer bestimmten Kraft in Verschieberichtung der beiden Mantelrohre, die Verschiebung frei gibt. Alternativ kann das Losbrechelement auch direkt am Ende oder sogar mit einem bestimmten Abstand zum Ende des inneren Matelrohres angeordnet sein, wordurch auf eine spezielle Aussparung am inneren Mantelrohr verzichtet werden kann.

Ein besonderer Vorteil der erfindungsgemäßen Lösung besteht darin, dass die Vorsprünge, die zur Bildung der Kontaktbereiche zwischen der Kunststoffhülse und dem inneren Mantelrohr und/oder zur Bildung der Losbrechelemente an der Kunststoffhülse angeordnet sind, einstückig, und nicht als separate Teile, die anschließend gefügt werden müssen, mit der Kunststoffhülse ausgebildet sind.

Der Einsatz der erfindungsgemäßen Lösung kann in Lenksäulen, die in ihrer Höhe und/oder in ihrer Länge oder überhaupt nicht verstellbar sind erfolgen. Im Falle einer nicht oder nur in ihrer Höhe verstellbaren Lenksäule dient die Kunststoffhülse als Führungselement im Crashfall. Im Falle einer in ihrer Länge verstellbaren Lenksäule kann die Kunststoffhülse auch zur Führung während der Verstellung dienen. Hier kann ebenfalls ein Losbrechelement vorgesehen sein, das den Verschiebeweg während einer Verstellung durch den Fahrer begrenzt.

Nachfolgend wird die vorliegenden Erfindung anhand von Zeichnungen in Ausführungsbeispielen beschrieben. Es zeigen:
- Fig. 1:: eine Lenksäule mit einem erfindungsgemäß ausgestalteten Lager in einer perspektivischen Darstellung;
- Fig. 2:: die Lagerkomponenten der Lenksäule in einer schematischen Darstellung;
- Fig. 3:: die Lagerkomponenten aus Figur 2 in der Betriebsstellung,
- Fig. 4:: einen weiteres Ausführungsbeispiel, gezeigt im Längsschnitt entlang der Mittelachse der Anordnung entsprechend Figur 3,
- Fig. 5:: einen Querschnitt durch die Anordnung gemäß Figur 4 entlang der Linie V-V; sowie
- Fig. 6:: eine alternative Ausführungsform in einem Ausschnitt, in analoger Sicht wie in Figur 5.

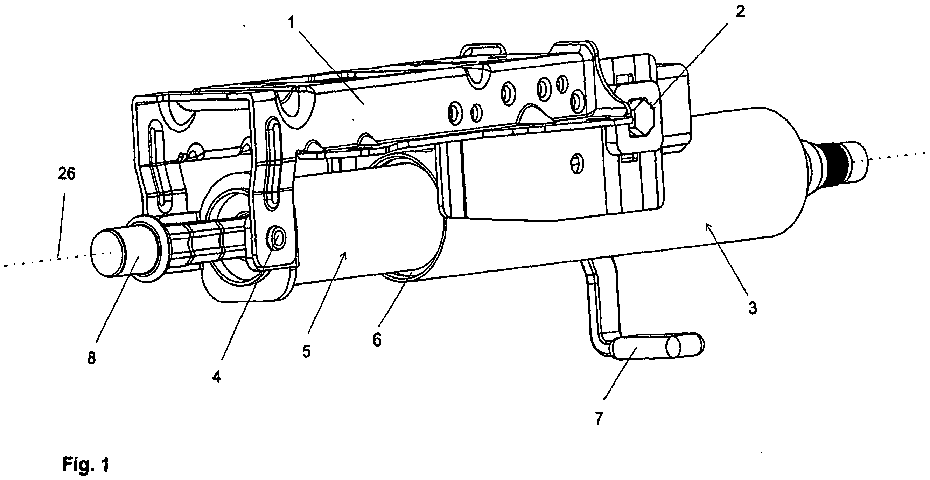

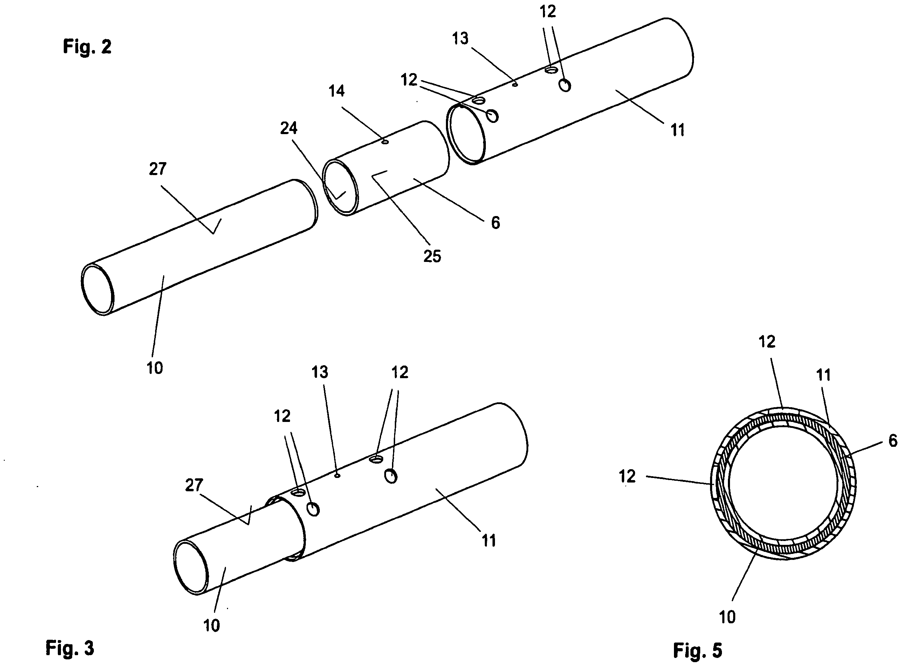

Die Fig. 1 zeigt perspektivisch eine Lenksäule für ein Kraftfahrzeug mit einer Konsole 1 zur karosseriefesten Befestigung. Die Konsole 1 trägt ein Klemmsystem 2 zur Halterung einer oberen Manteleinheit 3 sowie ein Schwenklager 4, in dem eine untere Manteleinheit 5 gelagert ist. Die obere Manteleinheit 3 und die untere Manteleinheit 5 sind konzentrisch zueinander mit der gemeinsame Zentralachse 26, die mit der Achse der Lenkspindel 8 zusammenfällt, angeordnet. Sie sind im Wesentlichen rohrförmig ausgebildet. Zwischen der oberen Manteleinheit 3 und der unteren Manteleinheit 5 ist eine Kunststoffhülse 6 eingesetzt. Die Kunststoffhülse 6 (vgl. Fig. 2) besitzt eine Außenfläche 25 und eine Innenfläche 24, die etwa parallel zueinander ausgerichtet sind. Ein Verstellhebel 7 dient zur Betätigung des Klemmsystems 2.

Im Innern der Manteleinheiten 3 und 5 ist eine Lenkwelle 8 drehbar gelagert.

Die Erfindung ist nicht auf die Ausführung, bei der die obere und untere Manteleinheit konzentrisch zueinander angeordnet sind, beschränkt. Es ist denkbar und möglich, die Manteleinheiten exzentrisch zu einander anzuordnen.

Die Fig. 2 zeigt die koaxial zueinander angeordneten Bauteile der oberen Manteleinheit 3 und der unteren Manteleinheit 5 sowie die Kunststoffhülse 6 in einer schematischen Darstellung vor dem Zusammenfügen. Die untere Manteleinheit 1 weist dabei ein inneres Mantelrohr 10 mit einer Außenfläche 27 auf. Die obere Manteleinheit 3 weist ein äußeres Mantelrohr 11 auf. Zwischen dem inneren Mantelrohr 10 und dem äußeren Mantelrohr 11 ist die Kunststoffhülse 6 vorgesehen. Im gezeigten Ausführungsbeispiel sind am äußeren Mantelrohr 11 an seiner äußeren Umfangsfläche insgesamt 4 Durchbrüche 12 ausgebildet, die mit Vorzug kreisrund ausgebildet sind. Mit Vorzug ist eine weitere Passbohrung 13 zwischen den Durchbrüchen 12 angeordnet. Die Kunststoffhülse 6 trägt entsprechend eine Passbohrung 14, die mittig am äußeren Umfang angeordnet ist.

Die Fig.3 zeigt die Bauteile der Fig. 2 in zusammengefügten Zustand. Zur Montage wurde die Kunststoffhülse 6 mit einem Presssitz in das äußere Mantelrohr 11 eingepresst, und zwar mit Vorteil so weit, dass die Passbohrung 13 des äußeren Mantelrohrs 11 mit der Passbohrung 14 der Kunststoffhülse 6 zur Deckung gebracht wurde. In die durch den Presssitz fest in dem äußeren Mantelrohr 11 sitzende Kunststoffhülse 6 wurde dann mit einem Schiebesitz das innere Mantelrohr 11 eingeschoben. Das innere Mantelrohr 10 ist mit geringem Kraftaufwand in der Kunststoffhülse 6 axial verschieblich.

Mit Vorzug sind das innere Mantelrohr 10 und das äußere Mantelrohr 11 zueinander konzentrisch mit der Zentralachse 26 angeordnet. Es ist jedoch denkbar und möglich, die beiden Mantelrohre 10, 11 exzentrisch zueinander anzuordnen. In diesem Fall ist die Außenfläche 25 der Kunststoffhülse 6 exzentrisch zur Innenfläche 24 der Kunststoffhülse 6 angeordnet. Dabei wird der kleine exzentrische Versatz zwischen dem inneren Mantelrohr 10 und dem äußeren Mantelrohr 11, der durch die Einformung der vorsprünge 23 entsteht vernachlässigt.

Auf die Passbohrung 14 kann auch verzichtet werden. In diesem Fall können andere Mittel zur Positionierung bei der Montage, beispielsweise Anschläge in den Montagewerkzeugen, vorgesehen sein oder die Kunststoffhülse 6 wird einfach auf Anschlag in das äußere Mantelrohr 11 eingepresst.

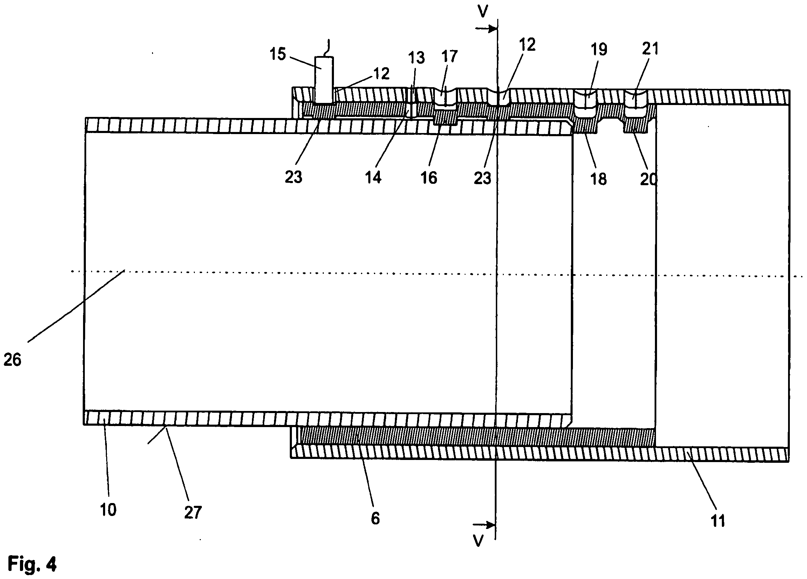

Ein weiterer Fertigungsschritt ist in der Figur 4 ebenfalls schematisch veranschaulicht. Eine Sonotrode 15 wird in einen Durchbruch 12 eingeführt und in mechanischen Kontakt mit der Kunststoffhülse 6 im Bereich des Durchbruchs 12 gebracht. Bei Aktivierung der Sonotrode 15 wird durch die mechanische Leistung des eingebrachten Ultraschalls die Kunststoffhülse 6 lokal erwärmt und dadurch erweicht. Die Kunststoffhülse 6 wird dadurch verformbar und unter mechanischem Druck der Sonotrode 15 auf das innere Mantelrohr 10 gepresst. Es ergibt sich eine lokale Kontaktstelle zwischen der Kunststoffhülse 6 und dem inneren Mantelrohr 10 in Form einer Einprägung. Diese Einprägung der Kunststoffhülse 6 reduziert das Spiel des inneren Mantelrohrs 10 in der Kunststoffhülse 6 auf ein geringes Maß, vorzugsweise zu Null. Entsprechend wird in den anderen Ausnehmungen 12 verfahren, so dass sich über die Umfangsfläche des inneren Mantelrohrs 10 mehrere möglichst spielfreie Anlagepunkte ergeben.

Das Ausführungsbeispiel entsprechend der Figur 4 ist in Bezug auf das in Figuren 2 und 3 dargestellte Ausführungsbeispiel in der Weise geändert, dass zusätzlich Losbrechelemente 16, 18, 20 vorgesehen sind. Die Losbrechelemente werden analog wie die Anlagepunkte direkt aus der Kunststoffhülse 6 mittels einer Sonotrode, die durch die Aussparungen 17, 19, 21 geführt wird und unter Ultraschallanregung den Kunststoff erwärmt und mittels Pressung einen Vorsprung herbeiführt, so das die Losbrechelemente 16, 18, 20 in die Bewegungsbahn des inneren Mantelrohres 10 hineinragen. Entsprechend dem Beispiel ist ein Losbrechelement 16 in eine Aussparung 22 im inneren Mantelrohr 10 eingeformt. Auch wenn im Ausführungsbeispiel drei Losbrechelemente gezeigt sind, ist die Anzahl frei wählbar. Insbesondere kann ein einziges Losbrechelement genügen. Die Länge der Kunststoffhülse wird dabei den Erfordernissen angepasst.

Die Vorspünge der Losbrechelemente 16, 18, 20 stehen dabei über die Außenfläche 27 des inneren Mantelrohrs 10 über, bevorzugt in einem Bereich von 0,5mm bis 4mm, besonders bevorzugt im Bereich von 1mm bis 2,5mm. Auf diese Weise wird erreicht, dass eine Verschiebung der beiden Mantelrohre 10, 11 zumindest bis zu einer vorgebbaren Kraft verhindert ist. Gleichzeitig kann bei Überschreiten einer vorgebbaren Kraft das Losbrechelement weggeschert oder zurückgedrückt werden, so dass die Verschiebung der beiden Mantelrohre 10, 11 zueinander ermöglicht ist. Als Kraft ist hier die Kraft in Richtung der Zentralachse 26 auf die Mantelrohre 10, 11 zur Erzeugung einer Verschiebung, wie sie insbesondere im Crashfall auftritt, zu verstehen.

Im Fall einer verstellbaren Lenksäule ist das Losbrechelement 20 derart angeordnet, dass erst nach erreichen eines bestimmten Verschiebeweges die weitere Verschiebung bei Unterschreitung einer entsprechenden Kraft verhindert wird. Im Beispiel hat das Losbrechelement 20 einen entsprechenden Abstand vom inneren Mantelrohr 10, wenn die Manteleinheiten 3, 5 auf die größte Länge ausgezogen sind. Alternativ kann die Aussparung 22 als Langloch ausgebildet sein.

Die Figur 5 zeigt den im letzten beschriebenen Verfahrensschritt erzeugten Zustand in einem Querschnitt, in dem die drei konzentrisch ineinander gefügten Bauteile dargestellt sind.

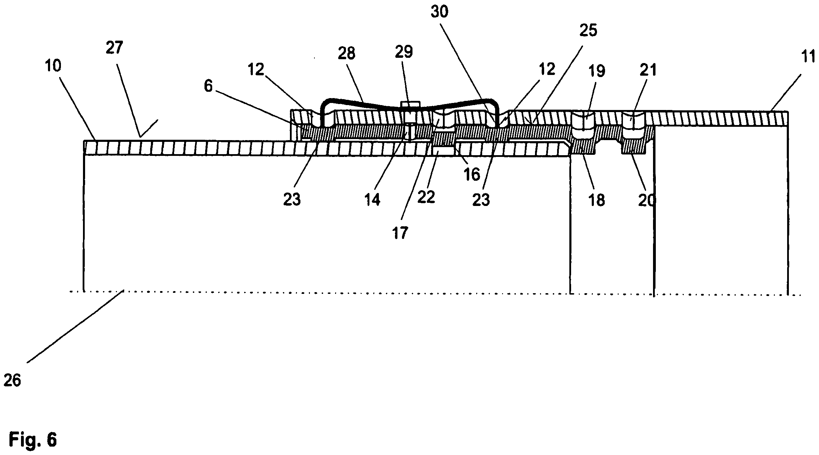

Eine weitere Ausführungsform ist in der Figur 6 schematisch veranschaulicht. Gemäss dieser Ausführungsform wird die Kunststoffhülse 6 von ihrer Außenfläche 25 lokal mit einer Federkraft beaufschlagt. Hierzu ist eine Feder 28 angeordnet, die entsprechend Durchbrüche 12 im äußeren Mantelrohr 11 durchgreift und mit einem Befestigungselement 29 am äußeren Mantelrohr 11 unter Vorspannung gehalten ist. Dadurch wird die Kunststoffhülse 6 in vordefinierten Flächenbereichen 30, entsprechend den Vorsprüngen 23, an die äußere Fläche 27 des inneren Mantelrohrs 10 angelegt, bzw. elastisch verformt und entsprechend angedrückt. Mit Vorteil, aber nicht zwingend, sind, wie in Zusammenhang mit den anderen Ausführungsformen der Erfindung bereits beschrieben, zuvor mittels plastischer Verformung entsprechende Vorsprünge 23 in der Kunststoffhülse 6 ausgebildet worden. Durch die Verwendung der zusätzlichen Federkraft, können die oben bereits beschriebenen Restspiele, wie sie durch Schrumpfungsprozesse oder Rückfederungen zwischen der Kunststoffhülse 6 und der Außenfläche 27 des inneren Mantelrohres einstellen, falls erforderlich beseitigt werden. Bei der Anwendung dieser Ausführungsform ist zu berücksichtigen, dass die Verschiebekraft zur Verschiebung der beiden Mantelrohre 10, 11 durch die Federkraft erhöht wird.

Im Ergebnis ergibt sich durch die beschriebene Anordnung und das beschriebene Fertigungsverfahren eine koaxiale Anordnung eines unteren Mantelteils in einem oberen Mantelteil mit einer dazwischen liegenden Kunststoffhülse. Die Anordnung ist nahezu oder völlig spielfrei, so dass insbesondere auch kein Klappern im praktischen Betrieb auftreten kann. Wenn die Teleskopierbarkeit der Manteleinheit als Sicherheitselement für einen Aufprall vorgesehen ist, wird durch die beschriebene spielfreie Zusammenfügung auch in diesem Fall eine sichere Führung gewährleistet, insbesondere ein Verkanten der koaxialen Bauelemente ausgeschlossen. Die angestrebte Funktion, nach der die Manteleinheit bei einem Aufprall unter Einwirkung von Axialkräften zusammenschiebbar ist, ist gewährleistet.

Alternative Ausführungsbeispiele der Erfindung können abweichend von der beschriebenen Ausführung auch nicht runde Mantelrohre und eine entsprechend nicht runde Kunststoffhülse aufweisen. So ist die Erfindung beispielsweise auch anwendbar bei Mantelrohren 10, 11, bei denen die Oberflächen eine oder mehrere korrespondiere kleine Abflachungen aufweisen, um eine Verdrehsicherung darzustellen. Es sind aber auch andere polygonale oder elliptische oder sonstige nichtrunde Formen denkbar und möglich.

Die Form und die Anordnung der Durchbrüche im äußeren Mantelrohr können abweichen. So können beispielsweise auch Durchbrüche vorgesehen sein, die schlitzartig in Umfangsrichtung des äußeren Mantelrohrs verlaufen und dabei einen Umfangswinkel von 45° bis 180° überdecken.

Die Kunststoffhülse ist aus einem thermoplastischen Material gefertigt, so dass nicht nur die derzeit bevorzugte Plastifizierung des Materials mit einer Ultraschall-Sonotrode möglich ist, sondern auch eine anderweitige lokale Erwärmung zum Einsatz kommen kann, beispielsweise durch Heißprägen oder IR-Laserstrahlung. Bei der Einformung von schlitzartigen Öffnungen ist dann auch eine linienförmige Anlagefläche des inneren Mantelrohres 10 an der Kunststoffhülse 6 erzielbar. Es kann auch eine Verformung der Kunststoffhülse 6 ohne mechanischen Druck erzielt werden, indem eineKunststoffhülse 6 verwendet wird, die sich bei Erwärmung zusammen zieht. In diesem Fall wird die Kunststoffhülse 6 im Bereich der Durchbrüche des äußeren Mantelrohrs erwärmt und zieht sich dann allein aufgrund ihrer Materialeigenschaften wie der entstehenden Oberflächenspannung nach innen in Richtung auf das innere Mantelrohr 10 zusammen und kommt so in eine sichere und nach Erkalten des Materials auch feste, spielfreie Anlage.

### Bezugszeichen

1. Konsole
2. Klemmsystem
3. obere Manteleinheit
4. Schwenklager
5. untere Manteleinheit
6. Kunststoffhülse
7. Verstellhebel
8. Lenkwelle
10. inneres Mantelrohr
11. äußeres Mantelrohr
12. Durchbrüche
13. Passbohrung
14. Passbohrung
15. Sonotrode
16. Losbrechelement
17. Aussparung
18. Losbrechelement
19. Aussparung
20. Losbrechelement
21. Aussparung
22. Aussparung
23. Vorsprünge
24. Innenfläche der Kunststoffhülse
25. Außenfläche der Kunststoffhülse
26. Zentralachse
27. Außenfläche des inneren Mantelrohrs
28. Federelement
29. Befestigungselement
30. Flächenbereich

## Patentansprüche

1. Lenksäule für ein Kraftfahrzeug, mit einer Konsole (1), die eine obere Manteleinheit (3) und eine untere Manteleinheit (5) trägt, wobei die Manteleinheiten (3, 5) eine darin drehbar gelagerte Lenkwelle (8) umgeben und wobei die Manteleinheiten (3, 5) ein inneres Mantelrohr (10), mit einer äußeren Fläche (27) und ein das innere Mantelrohr (10) zumindest abschnittsweise umgebendes äußeres Mantelrohr (11) aufweisen, welche in ihrer Axialrichtung ineinander mittels einer dazwischen liegenden thermoplastischen Kunststoffhülse (6), die eine Innenfläche (24), die zum inneren Mantelrohr (10) gerichtet ist, und eine Außenfläche (25), die zum äußeren Mantelrohr (11) gerichtet ist, aufweist, verschieblich gelagert sind, **dadurch gekennzeichnet, dass** die Kunststoffhülse (6) mit einer Presspassung in das äußere Mantelrohr (11) eingesetzt ist und dass das äußere Mantelrohr (11) wenigstens einen Durchbruch (12) aufweiset, in dessen Bereich die Kunststoffhülse (6) an ihrer Innenfläche Vorsprünge (23) in Richtung des inneren Mantelrohrs (10) aufweist, an denen die Kunststoffhülse (6) an der äußeren Fläche (27) des inneren Mantelrohrs (10) angelegt ist.

2. Lenksäule nach Anspruch 1, **dadurch gekennzeichnet, dass** im äußeren Mantelrohr wenigstens eine Aussparung (17, 19, 21) ausgebildet ist, in dessen Bereich die Kunststoffhülse (6) an ihrer Innenfläche einen weiteren Vorsprung aufweist, dessen Abstand von einer Zentralachse (26) der Mantelrohre (10, 11) kleiner ist als der Abstand der äußeren Fläche (27) des inneren Mantelrohrs (10) in dem Bereich des vorsprunges ist.

3. Lenksäule nach Anspruch 2 **dadurch gekennzeichnet, dass** der weitere vorsprung als Losbrechelement (16, 18, 21) ausgebildet ist, das heißt im Falle des Überschreitens einer bestimmten in verschieberichtung der beiden Manterohre (10, 11) auf diese Mantelrohre (10, 11) wirkenden Kraft wegbricht und die Verschiebung freigibt.

4. Lenksäule nach einem der vorhergehenden Ansprüche,
**dadurch gekennzeichnet, dass** die Mantelrohre (10, 11) sowie die Kunststoffhülse (6) kreisrunde Querschnitte aufweisen.

5. Lenksäule nach einem der vorhergehenden Ansprüche,
**dadurch gekennzeichnet, dass** die Durchbrüche (12) bezüglich der Axialrichtung der Mantelrohre in wenigstens zwei axial beabstandeten Positionen vorgesehen sind.

6. Lenksäule nach einem der vorhergehenden Ansprüche,
**dadurch gekennzeichnet, dass** die Durchbrüche (12) als runde Bohrungen oder Ausstanzungen ausgebildet sind.

7. Lenksäule nach einem der vorhergehenden Ansprüche,
**dadurch gekennzeichnet, dass** die Durchbrüche (12) als schlitze ausgebildet sind, die zumindest teilweise in Umfangsrichtung des äußeren Mantelrohrs (11) verlaufen.

8. Lenksäule nach einem der vorhergehenden Ansprüche,
**dadurch gekennzeichnet, dass** ein Federelement 28 vorgesehen ist, das mindestens einen Durchbruch (12) durchgreift und unter Vorspannung auf einen Flächenbereich (30) der Außenfläche (25) der Kunststoffhülse (6) in Richtung des inneren Mantelrohrs (10) gehalten ist.

9. Verfahren zur Herstellung einer teleskopierbaren Lenksäule für ein Kraftfahrzeug, mit einer Konsole (1), die eine obere Manteleinheit (3) und eine untere Manteleinheit (5) trägt, wobei die Manteleinheiten (3, 5) eine darin drehbar gelagerte Lenkwelle (8) umgeben und wobei die Manteleinheiten (3, 5) ein inneres Mantelrohr (10), mit einer äußeren Fläche (27), und ein das innere Mantelrohr (10) zumindest abschnittsweise umgebendes äußeres Mantelrohr (11) aufweisen, welche in ihrer Axialrichtung ineinander mittels einer dazwischen liegenden thermoplastischen Kunststoffhülse (6) verschieblich gelagert sind, **dadurch gekennzeichnet, dass** die Kunstatoffhülse (6) mit einer Presspassung in das äußere Mantelrohr (11) eingesetzt wird, das innere Mantelrohr (10) mit einem Schiebesitz in die Kunststoffhülse (6) eingeführt wird und dass im Bereich wenigstens eines Durchbruchs (12) des äußeren Mantelrohrs (11) die Kunststoffhülse (6) durch plastische Verformung an das innere Mantelrohr (10) angelegt wird.

10. Verfahren nach Anspruch 9, **dadurch gekennzeichnet, dass** im Bereich wenigstens eines Durchbruchs (17, 19, 21) des äußeren Mantelrohre (11) in die Kunststoffhülse (6) durch plastische Verformung ein Vorsprung eingebracht wird, dessen Abstand von einer Zentralachse (26) der Mantelrohre (10, 11) kleiner ist als der Abstand der Außenfläche (27) des inneren Mantelrohrs (10) in diesem Bereich.

11. Verfahren nach Anspruch 9 oder 10, **dadurch gekennzeichnet, dass** die plastische verformung durch Wärmeeinwirkung erfolgt.

12. Verfahren nach einem der vorhergehenden Ansprüche 9 - 11, **dadurch gekennzeichnet, dass** die plastische Verformung durch Ultraschalleinwirkung und radialen Druck erfolgt.

13. verfahren nach einem der vorhergehenden Ansprüche 9 - 12, dadurch gakennzeichnet, dass die Verformung an wenigstens zwei Stellen erfolgt, die in Axialrichtung der Kunststoffhülse (6) voneinander beabstandet sind.

14. Verfahren nach einem der vorhergehenden Anspruche -9 - 13, **dadurch gekennzeichnet, dass** das innere Mantelrohr (10) eine glatte äußere Oberfläche aufweist, die auch nach Anlage der Kunststoffhülse (6) infolge der lokalen Verformung eine Verschieblichkeit und/oder Drehbarkeit des inneren Mantelrohrs (10) in der Kunststoffhülse (6) ermöglicht.

## Claims

1. Steering column for a motor vehicle, with a bracket (1), which carries an upper jacket unit (3) and a lower jacket unit (5), wherein the jacket units (3, 5) surround a steering shaft (8) rotatably mounted therein and wherein the jacket units (3, 5) have an inner jacket tube (10) with an outer face (27) and an outer jacket tube (11), which surrounds the inner jacket tube (10), at least in portions, said jacket tubes being mounted so that they can be displaced inside one another in their axial direction by means of a thermoplastic sleeve (6) located in between, which has an inner face (24), which is directed toward the inner jacket tube (10), and an outer face (25), which is directed toward the outer jacket tube (11), **characterised in that** the plastic sleeve (6) is inserted into the outer jacket tube (11) with a press fit and **in that** the outer jacket tube (11) has at least one opening (12), in the region of which the plastic sleeve (6), on its inner face, has projections (23) in the direction of the inner jacket tube (10), on which the plastic sleeve (6) is placed on the outer face (27) of the inner jacket tube (10).

2. Steering column according to claim 1, **characterised in that** at least one recess (17, 19, 21) is formed in the outer jacket tube, in the region of which the plastic sleeve (6), on its inner face, has a further projection, the spacing of which from a central axis (26) of the jacket tubes (10, 11) is smaller than the spacing of the outer face (27) of the inner jacket tube (10) in the region of the projection.

3. Steering column according to claim 2, **characterised in that** the further projection is configured as a breakaway element (16, 18, 21), in other words in the event of exceeding a specific force acting in the displacement direction of the two jacket tubes (10, 11) on these jacket tubes (10, 11), it breaks away and enables the displacement.

4. Steering column according to any one of the preceding claims, **characterised in that** the jacket tubes (10, 11) and the plastic sleeve (6) have circular cross-sections.

5. Steering column according to any one of the preceding claims, **characterised in that** the openings (12) are provided in at least two axially spaced apart positions in relation to the axial direction of the jacket tubes.

6. Steering column according to any one of the preceding claims, **characterised in that** the openings (12) are configured as round bores or punched-out holes.

7. Steering column according to any one of the preceding claim, **characterised in that** the openings (12) are configured as slots, which run at least partially in the peripheral direction of the outer jacket tube (11).

8. Steering column according to any one of the preceding claims, **characterised in that** a spring element (28) is provided, which engages through at least one opening (12) and is held under pretension on a surface region (30) of the outer face (25) of the plastic sleeve (6) in the direction of the inner jacket tube (10).

9. Method for producing a telescopic steering column for a motor vehicle, with a bracket (1), which carries an upper jacket unit (3) and a lower jacket unit (5), wherein the jacket units (3, 5) surround a steering shaft (8), which is rotatably mounted therein, and wherein the jacket units (3, 5) have an inner jacket tube (10), with an outer face (27), and an outer jacket tube (11), which surrounds the inner jacket tube (10), at least in portions, which jacket tubes are mounted so as to be displaceable inside one another in their axial direction by means of a thermoplastic sleeve (6) located in between, **characterised in that** the plastic sleeve (6) is inserted with a press fit in the outer jacket tube (11), the inner jacket tube (10) is introduced with a sliding fit in the plastic sleeve (6) and **in that** in the region of at least one opening (12) of the outer jacket tube (11), the plastic sleeve (6) is placed by plastic deformation on the inner jacket tube (10).

10. Method according to claim 9, **characterised in that** in the region of at least one opening (17, 19, 21) of the outer jacket tube (11), a projection is introduced into the plastic sleeve (6) by plastic deformation, the spacing of which projection from a central axis (26) of the jacket tubes (10, 11) is smaller than the spacing of the outer face (27) of the inner jacket tube (10) in this region.

11. Method according to claim 9 or 10, **characterised in that** the plastic deformation takes place by means of the action of heat.

12. Method according to any one of claims 9 to 11, **characterised in that** the plastic deformation takes place by means of the action of ultrasound and radial pressure.

13. Method according to any one of the preceding claims 9 to 12, **characterised in that** the deformation takes place at at least two points, which are spaced apart from one another in the axial direction of the plastic sleeve (6).

14. Method according to any one of the preceding claims 9 to 13, **characterised in that** the inner jacket tube (10) has a smooth outer surface, which, even after the abutment of the plastic sleeve (6) as a result of the local deformation, allows a displaceability and/or rotatability of the inner jacket tube (10) in the plastic sleeve (6).

## Revendications

1. Colonne de direction pour un véhicule automobile, comprenant une console (1) qui porte une unité de fourreau supérieure (3) et une unité de fourreau inférieure (5), les unités de fourreau (3, 5) entourant un arbre de direction (8) qui y est monté rotatif, et les unités de fourreau (3, 5) comportant un tube de fourreau intérieur (10) avec une surface extérieure (27), ainsi qu'un tube de fourreau extérieur (11) entourant au moins par tronçons le tube de fourreau intérieur (10), ces tubes de fourreau étant montés coulissants l'un dans l'autre dans leur direction axiale au moyen d'une douille de matériau synthétique (6) thermoplastique placée entre eux, qui présente une surface intérieure (24) dirigée vers le tube de fourreau intérieur (10), et une surface extérieure (25) dirigée vers le tube de fourreau extérieur (11),
**caractérisée en ce que** la douille de matériau synthétique (6) est insérée par un ajustement à force dans le tube de fourreau extérieur (11), et **en ce que** le tube de fourreau extérieur (11) présente au moins une ouverture de passage (12) dans la zone de laquelle la douille de matériau synthétique (6) présente sur sa surface intérieure, des protubérances (23) dirigées vers le tube de fourreau intérieur (10) et par lesquelles la douille de matériau synthétique (6) s'applique contre la surface extérieure (27) du tube de fourreau intérieur (10) .

2. Colonne de direction selon la revendication 1, **caractérisée en ce que** dans le tube de fourreau extérieur est formé au moins un évidement (17, 19, 21) dans la, zone duquel la douille de matériau synthétique (6) présente, sur sa surface intérieure, une autre protubérance dont la distance à un axe central (26) des tubes de fourreau (10, 11) est inférieure à la distance à cet axe de la surface extérieure (27) du tube de fourreau intérieur (10), dans la zone de ladite protubérance.

3. Colonne de direction selon la revendication 2, **caractérisée en ce que** ladite autre protubérance est réalisée en tant qu'élément de rupture (16, 18, 21), c'est-à-dire qu'il est sectionné dans le cas du dépassement d'une force déterminée agissant sur les deux tubes de fourreau (10, 11) dans la direction de coulissement de ces deux tubes de fourreau (10, 11), en autorisant ainsi le coulissement.

4. Colonne de direction selon l'une des revendications précédentes, **caractérisée en ce que** les tubes de fourreau (10, 11) ainsi que la douille de matériau synthétique (6) présentent des sections transversales de forme ronde circulaire.

5. Colonne de direction selon l'une des revendications précédentes, **caractérisée en ce que** les ouvertures de passage (12) sont prévues, en se référant à la direction axiale des tubes de fourreau, dans au moins deux positions espacées axialement.

6. Colonne de direction selon l'une des revendications précédentes, **caractérisée en ce que** les ouvertures de passage (12) sont réalisées sous forme de perçages ou de perforations de matriçage de forme ronde.

7. Colonne de direction selon l'une des revendications précédentes, **caractérisée en ce que** les ouvertures de passage (12) sont réalisées sous la forme de fentes qui s'étendent au moins en partie dans la direction périphérique du tube de fourreau extérieur (11).

8. Colonne de direction selon l'une des revendications précédentes, **caractérisée en ce qu'**il est prévu un élément de ressort (28), qui traverse au moins une ouverture de passage (12) et est maintenu sous précontrainte sur une zone de surface (30) de la surface extérieure (25) de la douille de matériau synthétique (6), en direction, du tube de fourreau intérieur (10).

9. Procédé de fabrication d'une colonne de direction rétractable de manière télescopique et destinée à un véhicule automobile, comprenant une console (1) qui porte une unité de fourreau supérieure (3) et une unité de fourreau inférieure (5), les unités de fourreau (3, 5) entourant un arbre de direction (8) qui y est monté rotatif, et les unités de fourreau (3, 5) comportant un tube de fourreau intérieur (10) avec une surface extérieure (27), ainsi qu'un tube de fourreau extérieur (11) entourant au moins par tronçons le tube de fourreau intérieur (10), ces tubes de fourreau étant montés coulissants l'un dans l'autre dans leur direction axiale, au moyen d'une douille de matériau synthétique (6) thermoplastique placée entre eux,
**caractérisé en ce que** l'on insère la douille de matériau synthétique (6) par un ajustement à force dans le tube de fourreau extérieur (11), **en ce que** l'on introduit le tube de fourreau intérieur (10) selon un ajustement coulissant dans la douille de matériau synthétique (6), et **en ce que** dans la zone d'au moins une ouverture de passage (12) du tube de fourreau extérieur (11), on applique la douille de matériau synthétique (6), par déformation plastique, contre le tube de fourreau intérieur (10).

10. Procédé selon la revendication 9, **caractérisé en ce que** dans la zone d'au moins une ouverture de passage (17, 19, 21) du tube de fourreau extérieur (11), on réalise dans la douille de matériau synthétique (6), par déformation plastique, une protubérance dont la distance à un axe central (26) des tubes de fourreau (10, 11) est inférieure à la distance à cet axe de la surface extérieure (27) du tube de fourreau intérieur (10), dans cette zone.

11. Procédé selon la revendication 9 ou la revendication 10, **caractérisé en ce que** la déformation plastique est effectuée par action de chaleur.

12. Procédé selon l'une des revendications 9 à 11 précédentes, **caractérisé en ce que** la déformation plastique est effectuée par l'action d'ultrasons et sous l'effet d'une pression radiale.

13. Procédé selon l'une des revendications 9 à 12 précédentes, **caractérisé en ce que** la déformation est effectuée en au moins deux endroits qui sont espacés l'un de l'autre dans la direction axiale de la douille de matériau synthétique (6).

14. Procédé selon l'une des revendications 9 à 13 précédentes, **caractérisé en ce que** le tube de fourreau intérieur (10) présente une surface extérieure lisse, qui permet, même après application de la douille de matériau synthétique (6) suite à la déformation locale, une possibilité de coulissement et ou une possibilité de rotation du tube de fourreau intérieur (10) dans la douille de matériau synthétique (6).
